# EUROPEAN PATENT SPECIFICATION

(11) **EP 1 901 638 B1**
(45) Date of publication and mention of the grant of the patent: **03.12.2008**
(21) Application number: 06753971.8
(22) Date of filing: 30.05.2006
(51) Int. Cl.: A47J 31/44

(54) **COFFEE MASCHINE STRUCTURE WITH HIGH FLEXIBILITY OF USE**
KAFFEEMASCHINENSTRUKTUR MIT HOCHFLEXIBLER VERWENDUNG
STRUCTURE DE CAFETIÈRE À GRANDE SOUPLESSE D'UTILISATION

(30) Priority: 22.06.2005 IT MI20051178
(43) Date of publication of application: 26.03.2008
(73) Proprietor: De'Longhi SpA, 31100 Treviso (IT)
(72) Inventor: MARCONI, Gian Carlo, I-31057 Silea (IT)
(74) Representative: Rapisardi, Mariacristina
(86) International application number: PCT/EP2006/005136
(87) International publication number: WO 2006/136268

(56) References cited:
- EP-A- 0 688 524
- DE-U1- 8 712 058
- GB-A- 2 268 392
- US-A1- 2003 051 603

## Description

The present invention refers to an automatic or semi-automatic coffee machine structure with high flexibility of use.

The traditional coffee machines may be adapted, through the use of appropriate accessories, for the production of different types of hot aromatic drinks, such as tea, cappuccino, regular coffee, etc...

In substance, according to the type of drink to be prepared, a particular accessory is connected to the steam or hot water dispenser of the coffee machine.

Such accessories are not always found within reach or are easily available when needed.

Moreover, such accessories may have a structure and operation such to not always guarantee the production of a hot drink having the desired organoleptic properties.

The technical task proposed by the present invention is therefore that of realising a coffee machine with high flexibility of use which permits eliminating the noted technical drawbacks of the prior art.

In the scope of this technical task, one object of the invention is that of realising a coffee machine with high flexibility of use which may be versatilely adapted to produce various types of hot aromatic drinks having optimal organoleptic properties.

Another object of the invention is that of realising a coffee machine which has high ease of use for the preparation of different types of hot drinks.

Not last object of the invention is that of realising a coffee machine with high flexibility of use which is efficient, easy to use, structurally simple and economic.

The technical task, as well as these and other objects are achieved according to the present invention by realising a coffee machine structure with high flexibility of use, characterised in that it comprises multiple accessories for the realisation of different typologies of hot drinks and support means of said accessories, each of said accessories comprising a collecting chamber adapted to be movably connected, through hydraulic seal means, with the external dispenser nozzle of hot water/steam of said coffee machine, said collecting chamber having at least one input line of said hot water or steam coming from said dispenser and an output line of said hot water or steam, positioned in a manner adapted for the optimal treatment of the aromatic essence which realises said different types of hot drinks.

Other characteristics of the present invention are moreover defined in the subsequent claims.

Further characteristics and advantages of the will be more evident from the description of a preferred but not exclusive embodiment of the coffee machine with high flexibility of use according to the finding, illustrated as indicative and not limiting of the attached drawings, wherein:
Figure 1 shows a perspective view of a coffee machine having an accessory carrier in accordance with a first preferred embodiment of the present invention;
Figure 2 shows a perspective view of a coffee machine having an accessory carrier in accordance with a second preferred embodiment of the present invention;
Figure 3 shows a perspective view of a coffee machine having an accessory carrier in accordance with a third preferred embodiment of the present invention;
Figure 4 shows a perspective view of a coffee machine having an accessory carrier in accordance with a fourth preferred embodiment of the present invention;
Figure 5 shows a perspective view of a coffee machine having an accessory carrier in accordance with a fifth preferred embodiment of the present invention;
Figure 6a shows an axially-sectioned, side elevation view of an accessory in accordance with the present invention, particularly suitable for the preparation of regular coffee;
Figure 6b shows in perspective view a coffee machine having the accessory of figure 6a;
Figure 7 shows an axially-sectioned, side elevation view of an accessory in accordance with the present invention, particularly suitable for the preparation of tea from an aromatic essence contained in a filter;
Figure 8 shows an axially-sectioned, side elevation view of a first accessory equipped with stirrer in accordance with the present invention, particularly suitable for the preparation of a hot aromatic drink from a water-soluble aromatic essence;
Figure 9 shows an axially-sectioned, side elevation view of a second accessory equipped with stirrer in accordance with the present invention, particularly suitable for the preparation of a hot aromatic drink from a water-soluble aromatic essence;
Figure 10 shows an axially-sectioned, side elevation view of a third accessory equipped with stirrer in accordance with the present invention, particularly suitable for the preparation of a hot aromatic drink from a water-soluble aromatic essence; and
Figure 11 shows an axially-sectioned, side elevation view of an accessory equipped with stirrer in accordance with the present invention, suitable for the preparation of tea from an aromatic essence which is loose or contained in a filter. Equivalent parts in the different preferred embodiments will be indicated with the same numeric reference.
   With reference to the mentioned figures, a coffee machine structure is indicated in its entirety with the reference number 1.

The coffee machine 1 comprises at its interior an infusion chamber fed by hot water produced by one or more boilers in turn also connected with an external dispenser nozzle 2.

The infusion chamber, in the illustrated case of an automatic coffee machine 1, may be defined as exemplifying by the coupling between a movable infusion group (not shown), having an infusion cylinder in which an infusion piston is sliding, and a closure piston (not shown) which is generally integral or supported by the boiler (also not shown).

In the case of a semi-automatic machine (not illustrated), the infusion chamber may be defined as exemplifying by the coupling between an upper filter hydraulically connected to the boiler, and a lower filter borne by a cup which may be manually removed from the coffee machine.

The hydraulic circuit of the coffee machine 1 has a water tank (and/or a connection to the water supply), a pump which draws the water from the tank and feeds it to the boiler where it is heated, the infusion chamber where the heated water percolates through the loose or packed coffee powder to generate the coffee drink, and one or more transfer spouts of the coffee drink to one or more underlying cups.

As said, the boiler or boilers are also connected to the external dispenser nozzle 2 from which, according to the setting operated through the control panel of the coffee machine, hot water or steam may exit.

Advantageously, the coffee machine structure 1 comprises multiple accessories 3 for the realisation of different types of hot drinks and support means 4 of the accessories 3.

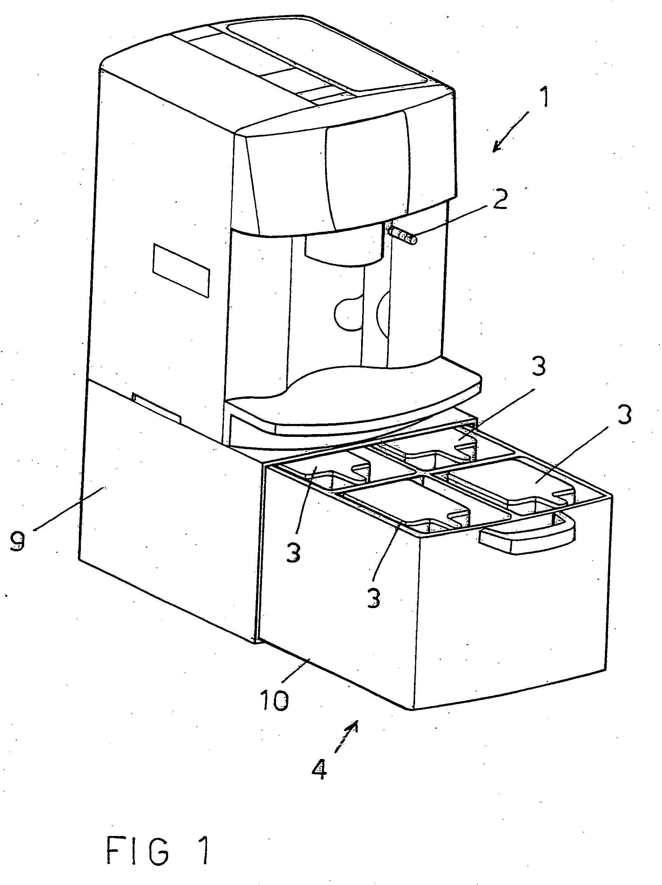

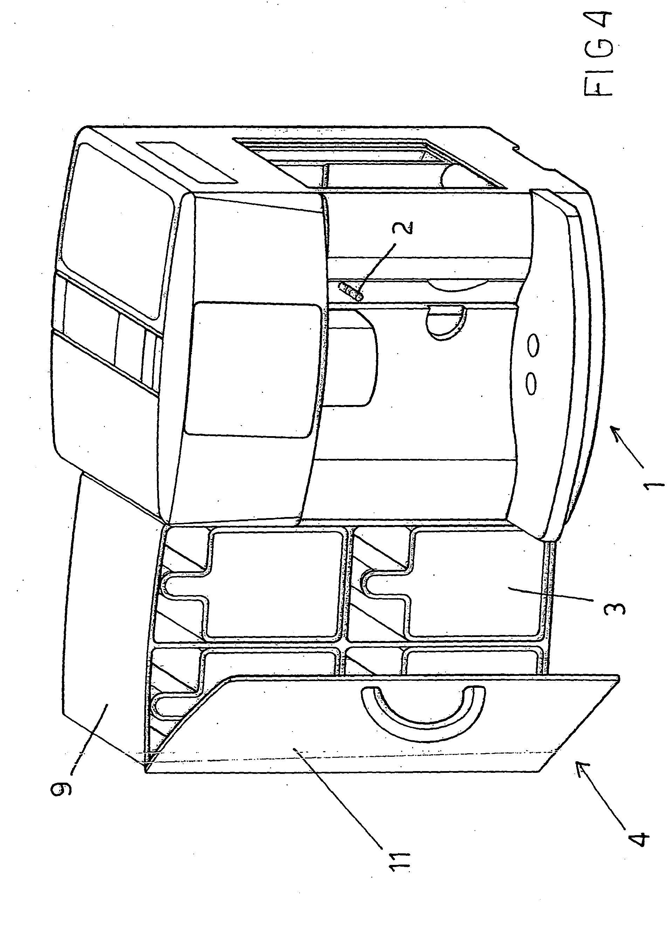

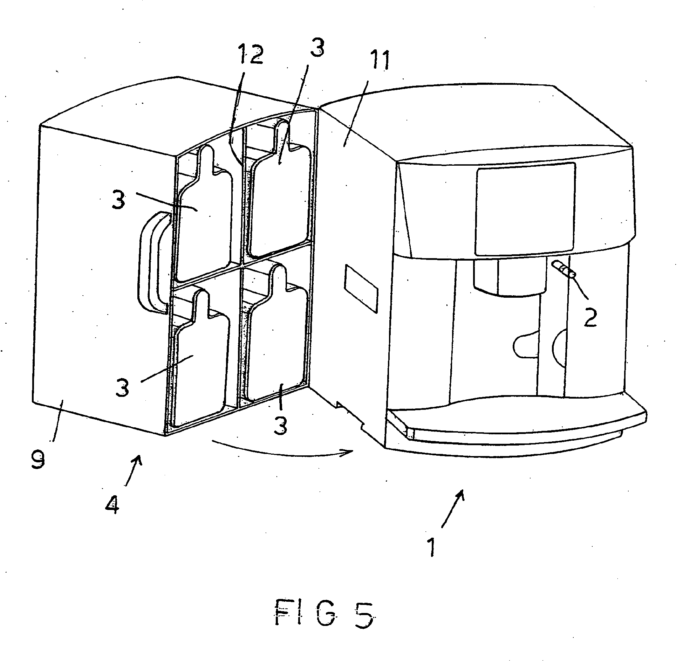

The support means 4 of the accessories 3 may in particular comprise a box casing 9 having at its interior an extractable drawer 10 (figures 1, 2 and 3) on which at least one door 11 is hinged for its closure (figures 4 and 5).

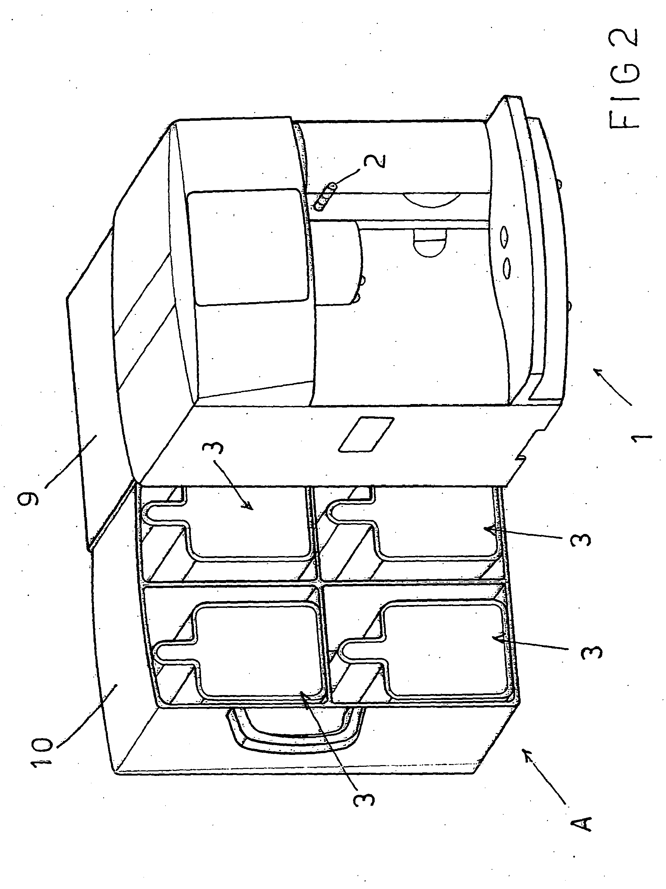

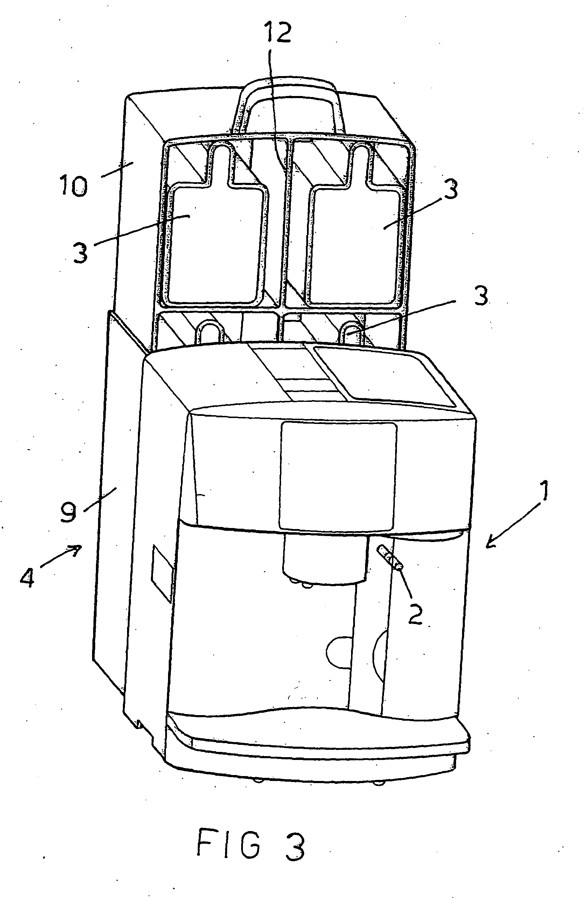

The casing 9 shape advantageously matches that of one of the sides (figures 4 and 5) or with the back (figures 2 and 3) or with the base (figure 1) or with the top of the machine 1 to which it is associated.

Preferably, the space delimited by the casing 9 is divided by suitable separators 12 into multiple compartments intended to house an accessory 3.

The accessory 3 generally has a collector 13 for the drink, equipped with cover 14.

The accessory 3 moreover has a collecting chamber 5 adapted to be movably connected, through hydraulic seal means 6, with the external dispenser nozzle 2.

The collecting chamber 5 in turn has at least one input line 7 for the hot water or steam coming from the dispenser 2 and an output line 8 for the hot water or steam, positioned in a manner adapted for the optimal treatment of the aromatic essence which realises the different types of hot drinks.

More precisely, the input line 7 of the chamber 5 is coaxial with the dispenser 2, while the output line 8, composed for example by a plurality of calibrated holes, is generally transverse and in particular orthogonal to the dispenser 2.

The hydraulic seal means 6 comprise in particular at least one toroidal gasket which realises the seal, whether hydraulic or also at least in part mechanical, between the dispenser 2 and the input line 7 of the collecting chamber 5.

The accessory 3, when directed towards the production of a cappuccino, may be of the type described for example in the patent application MI2005A000749, which is held by the present applicant.

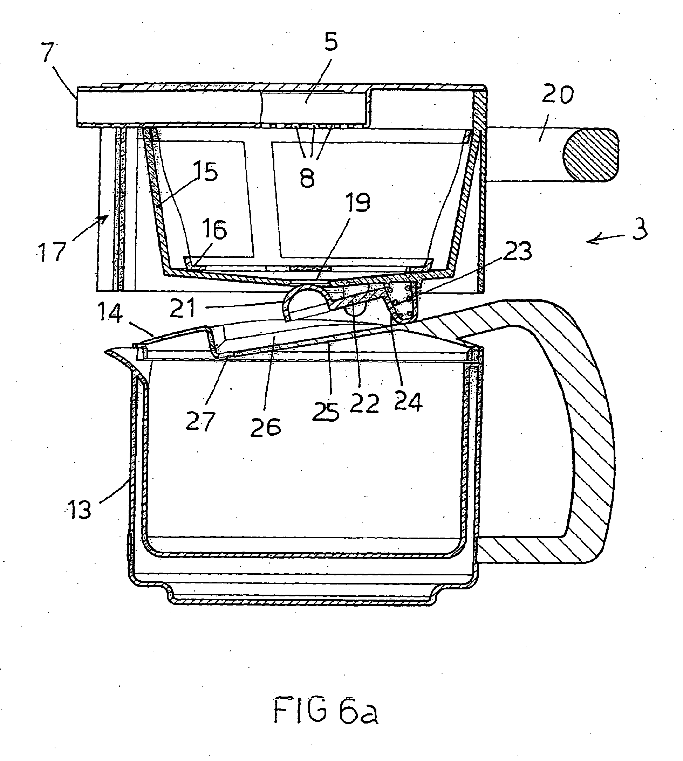

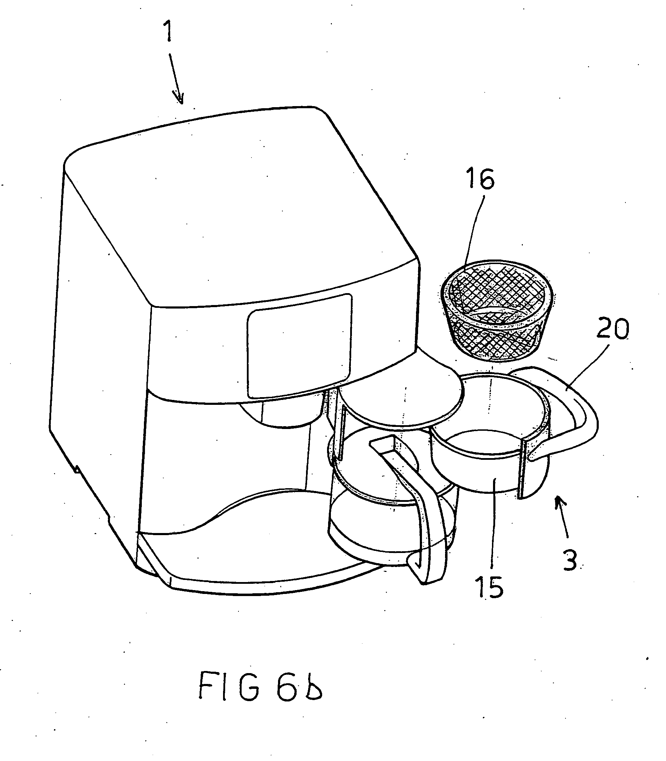

With reference now in particular to the figures 6a and 6b, the accessory 3 has a collecting chamber 5 which is operatively connected to a container 15 in which a cartridge or a filter 16 is positioned containing the aromatic essence for the preparation of the drink.

Also when the input line 7 of the collecting chamber 5 is connected to the dispenser 2 of the machine 1, the container 15 may be rotated from a position offset from the collecting chamber 5 in order to permitting the loading/unloading of the cartridge or filter 16, to a position superimposed on the collecting chamber 5 in order to receive the hot water from it for the preparation of the drink.

The operative connection between the container 15 and the collecting chamber 5 is realised by a rotation pin, transverse to the axis of the dispenser 2, which peripherally unites them.

The container 15 has a handle 20 for facilitating its rotation.

The container 15 then has on its bottom at least one drink dispensing hole 19.

Furthermore, to ensure the correct operation of the accessory 3, means of mechanical checking (not shown) are present between the collecting chamber 5 and the container 15 which may be engaged at the position of alignment.

Preferably, the checking means are associated with a microswitch (not shown) which is activated by their mutual engagement in order to enable the dispensing of the nozzle 2. In such a manner, the dispensing of nozzle 2 is blocked when the container 15 is not in work position.

The accessory 3 has a shutter 21 of the dispensing hole 19, borne by a lever 22 which supports it, in opposition and by the action of elastic means 23, for example a helical spring, in a normally closed position.

The shutter 21 prevents the exit of solid and/or liquid material from the container 3 when it is not associated with the collector 13.

The lever 22 is articulated at the bottom of the chamber 15, and in particular presents a control cam 24 for the opening of the shutter 21, actuated by a sloped ramp 25 conveying the drink towards the collector 13 which is positioned below the container 15.

The ramp 25 is made on the cover 14 of the collector 13 and has sides 26 for the lateral containment of the flow of the drink and at the base at least one hole 27 conveying the drink inside the collector 13.

The operation of the accessory 3 is as follows.

After having loaded the cartridge and brought the container 15 into operative position, one brings the collector 13 into position, taking care to couple the ramp 25 of the cover 14 with the cam 24 of the lever 22.

At the end of the positioning of the collector 13 under the container 15, the ramp 25 is found vertically below the dispensing hole 19 and the cam 24 has caused the opening of the shutter 21, so that the drink which progressively forms inside the container 15 drips towards the ramp 25 and from this to the conveyance hole 27.

We shall now refer to the other figures in which the collecting chamber 5 is made directly from the cover 14 of the collector 13.

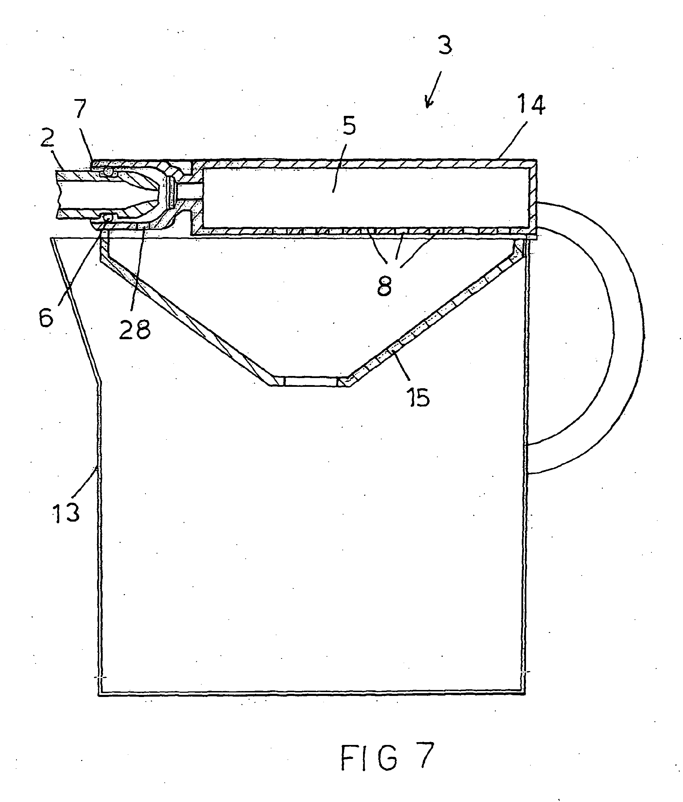

In figure 7, the cover 14 may be moved from the collector 13 and is associated with it by means of a simple support, maintaining itself in centred position thanks to the match between the perimeter edges of the two parts.

Both the collecting chamber 5 and the input line 7 are positioned above the open top of the container 15, which now has conical or frustoconical shape and is holed at the base to permit the exit of the drink.

In order to uniformly distribute the hot infusion water on the container 15, also the input line 7 is equipped with at least one transfer opening 28 of the hot water towards the container 15. The container 15 may be operatively connected to the collecting chamber 5 as described for the previous realisation.

Moreover, in this case, the container 15 itself also acts as a cover for the collector 13.

The operation of the accessory 3 in this case is as follows. The cartridge or filter is loaded, the container 15 brought into operative position with the collector 13 positioned under the container 15. Hot water is dispensed by the dispenser 5, which realising the infusion by passing through the cartridge or filter. The drink which is progressively formed is collected inside the collector 13.

The depth of the container 15 may be such that the cartridge or filter is positioned not far from the bottom of the collector 13, so that the cartridge or filter is progressively submerged by the drink which accumulates in the collector 13, thus extending the infusion.

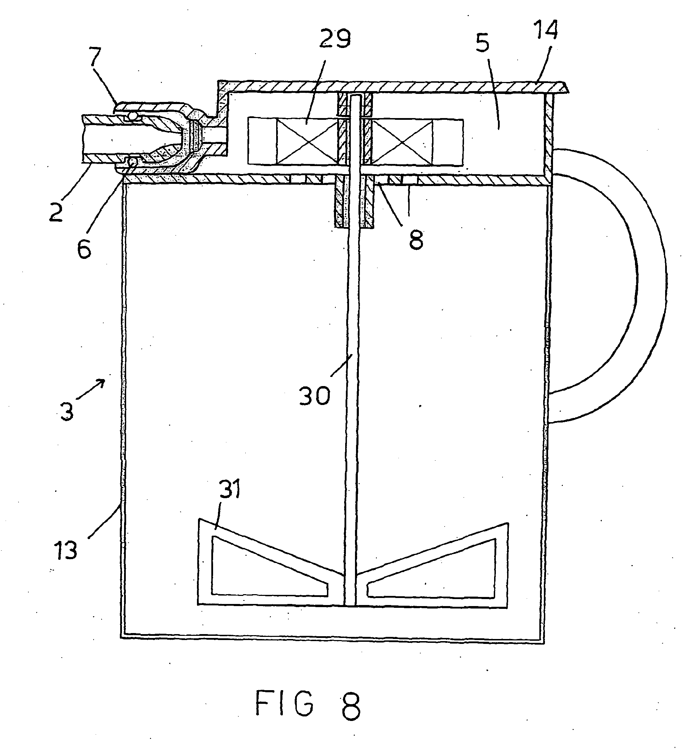

We shall now refer to figure 8.

The cover 14 may be moved from the collector 13 and associates with it by means of a simple support, maintaining itself in centred position thanks to the match between the perimeter edges of the two parts. Inside the collecting chamber 5, an impeller 29 is present having a shaft 30 which extends into the collector 13, where it supports a blade stirrer 31.

The impeller 29 is aligned with the dispenser 2 so that it may be directly driven by the flow of hot water coming from it.

The stirrer 31 is preferably placed in central position and adjacent to the bottom of the collector 13.

The operation of the accessory 3 in this case is as follows.

The water-soluble aromatic essence is arranged in the collector 13. The flow of hot water dispensed by the dispenser 5 tangentially feeds the impeller 29, driving it into rotation. The impeller 29 transmits the rotation through the shaft 30 to the blade stirrer 31, which causes the dissolution of the water-soluble essence in the hot water.

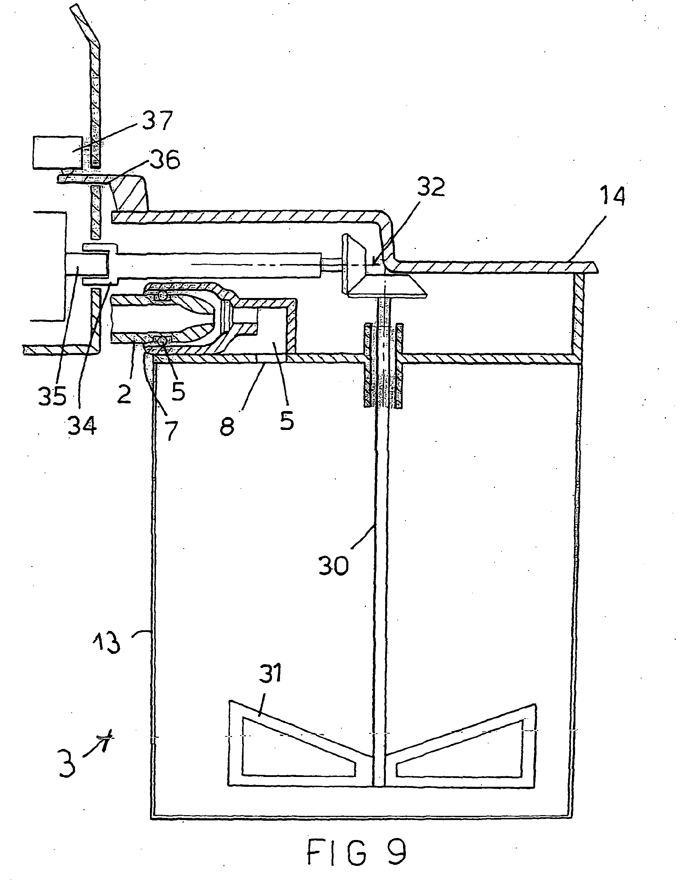

We shall now refer to figure 9.

The cover 14 may be moved from the collector 13 and associated with it by means of a simple support, maintaining itself in centred position thanks to the match between the perimeter edges of the two parts.

The accessory 3 has a gear transmission 32 adapted to transmit a rotating movement to a shaft 30 which extends into the collector 13 where it supports a blade stirrer 31.

The transmission 32 is contained in a housing chamber 33 made in the cover 14 of the collector 13.

The transmission 32 has an attachment 34 adapted for its connection to a power drive 35 present in the coffee machine.

The stirrer 31 is preferably placed in central position and adjacent to the bottom of the collector 13.

In this case, the collecting chamber 5 is made in the cover 14 away from the centre, this being centrally crossed by the rotation shaft 30 of the stirrer 31.

The accessory 3 preferably comprises a switching element 36 of a microswitch 37 which activates the power drive 35 when the attachment 34 is connected to the power drive 35.

The switching element 36 is present for example in the form of an actuator extension, cantilever supported by the upper part of the cover 14.

The functioning of the accessory 3 in this case is as follows.

The water-soluble aromatic essence is arranged in the collector 13 and the attachment 34 is connected to the power drive 35. The control unit of the coffee machine receives from the microswitch 37 the enabling of the power dispensing of the power drive 35, which causes the stirrer 31 to rotate, which in turn dissolves the water-soluble aromatic essence in the hot water fed at the same time by the dispenser 2 into the collector 13.

Such solution is preferable to the preceding one if a more intense and/or prolonged stirring is required of the drink.

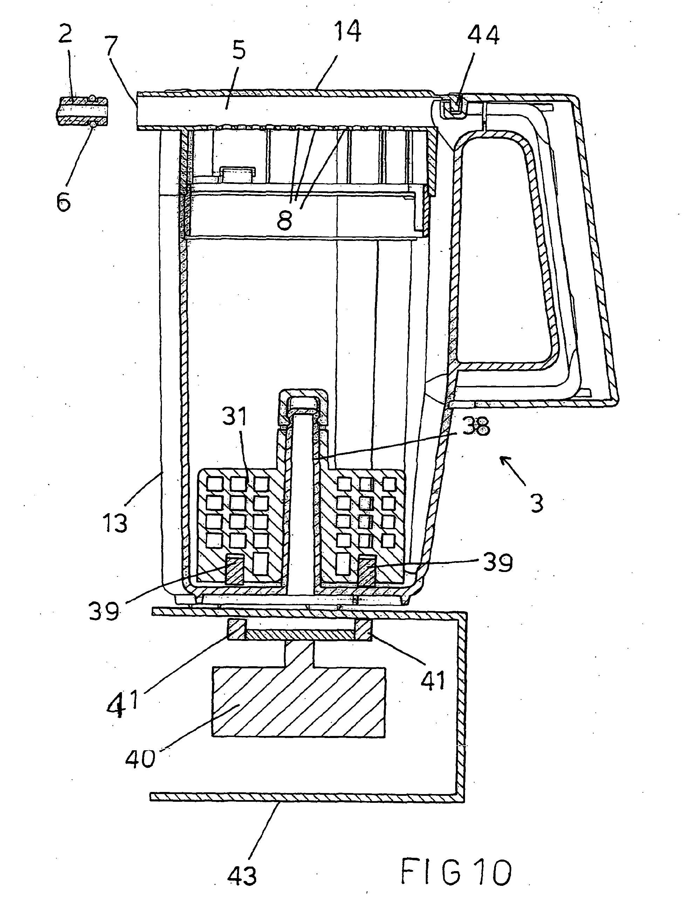

We shall refer now to figure 10.

The cover 14 is borne by the collector 13 by means of a fixed joint 44.

Inside the collector 13, there is a blade stirrer 31, freely rotating on a support and guide pin 38, on which it is fit.

The stirrer 31 is preferably placed in central position and adjacent to the end of the collector 13.

The guide pin 38 extends centrally from the bottom of the collector 13.

The stirrer 31 bears at its base at least one movement drive element 39 composed of a magnet operated by a magnet 41 motor 40 arranged at the portion of the coffee machine body 43 on which the collector 13 is placed when in use.

The operation of the accessory 3 in this case is as follows.

The water-soluble aromatic essence is arranged in the collector 13, and the motor 40 is activated which rotates the stirrer 31 which in turn dissolves the water-soluble aromatic essence in the hot water fed at the same time by the dispenser 2 into the collector 13.

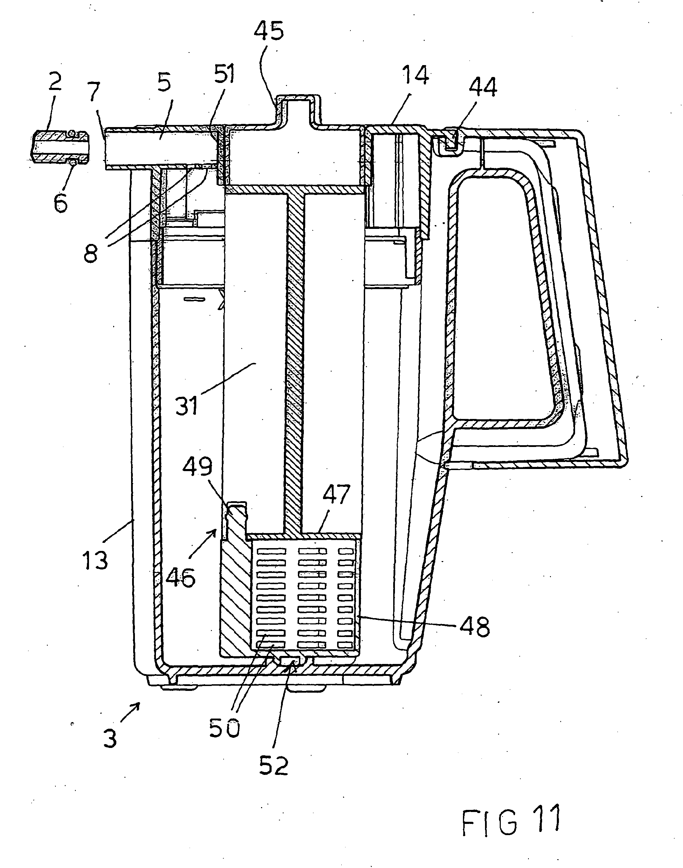

Finally, we shall refer to figure 11.

The cover 14 is borne by the collector 13 by means of fixed joint.

The collector 13 has at its interior a rotating blade stirrer 31 which extends outside the cover 14 with a handle 45 for its manual operation.

There are moreover foreseen operative connection means 46 between the base 47 of the stirrer 31 and a containment drawer 48 of the aromatic essence, which extends below the stirrer 31.

The drawer 48 has a tubular conformation with the top open and a plurality of slits 50 on its side wall.

The slits 50 are adapted to the passage of the drink produced from inside to outside the drawer 48, and also to the filtering of the aromatic essence if it is present in loose form in the drawer 48.

The drawer 48 is movable with respect to the stirrer 31 between an opening position permitting the loading of the aromatic essence at its interior and a closure position for the execution of the infusion.

In particular, the base 47 of the stirrer 31 opens and closes the top of the drawer 48, from which the aromatic essence is introduced.

The operative connection means 46 between the stirrer 31 and the drawer 48 in fact comprise a rotation pin 49 which extends parallel to the axis of the stirrer 31 and peripherally unites the stirrer 31 and the drawer 48. Through rotation in the opening direction, the base 47 opens the top of the drawer 48, while in the closing direction the base 47 covers the top of the drawer 48.

Centrally, the cover 14 presents a guide and support through seat 51 for the extraction and introduction of the stirrer 31 - drawer 48 set from/into the collector 13.

Finally, centring and rotation guiding means 52 are present in the drawer 48, for example a pin of the bottom of the drawer 48, rotatably coupled in a sleeve of the bottom of the collector 13, as illustrated.

The operation of the accessory 3 is briefly as follows.

The stirrer 31 - drawer 48 set is extracted from the collector 13, through the through seat 51 of the cover 14; the drawer 48 is rotated with respect to the stirrer 31 in order to open it, it is loaded with the aromatic essence and rotated in the opposite direction to close it; the stirrer 31 - drawer 48 set is inserted through the through seat 51 of the cover 14 until it engages the pin of the drawer bottom in the bottom sleeve of the collector 13.

Finally, hot water is fed from the dispenser 5 and the stirrer 31 is manually rotated in order to favour the infusion.

The control unit of the machine 1 is capable of modifying the operation parameters, adapting them to the type of drink to be prepared.

It is in fact noted that some parameters such as the temperature and/or the flow rate and/or speed of the infusion water generally depends on the infusion type to be produced. Parameter adjustment may consequently occur with the acquisition, by the control unit, of the drink type which the user chooses through the selection of a corresponding button present on the push-bottom panel of the machine.

Alternatively or complementarily, the parameter adjustment may consequently occur with the acquisition, by the control unit, of the accessory type which is connected to the machine, which a suitable sensor system communicates to the control unit.

In the case of acquisition of conflicting signals, the indication coming from the accessory naturally prevails.

In practice, any material type or size may be used, according to needs and the state of the art.

## Claims

1. Coffee machine structure (1) with high flexibility of use, **characterised in that** it comprises multiple accessories (3) for the realisation of different types of hot drinks and support means (4) of said accessories, each of said accessories (3) comprising a collecting chamber (5) adapted to be movably connected, through hydraulic seal means (6), with the external, hot water/steam dispenser nozzle (2) of said coffee machine (1), said collecting chamber (5) having at least one input line (7) of said hot water or steam coming from said dispenser (2) and an output line (8) of said hot water or steam.

2. Coffee machine according to claim 1, **characterised in that** each of said accessories (3) has a collector (13) of said drink equipped with a cover (14).

3. Coffee machine according to any one preceding claim, **characterised in that** said support means (4) of said accessories comprise a box casing (4) having an extractable drawer (10) at its interior.

4. Coffee machine according to any one preceding claim, **characterised in that** support means (4) of said accessories comprise a box casing (9) on which at least one door (11) is hinged for its closure.

5. Coffee machine according to any one preceding claim, **characterised in that** said casing (9) has a shape matching with that of one of the sides or with the back or with the base or with the top of said machine (1) to which it is associated.

6. Coffee machine according to one or more preceding claims, **characterised in that** said hydraulic seal means (6) comprise at least one toroidal gasket of mechanical and hydraulic seal interposed between said dispenser (2) and said input line (7) of said collecting chamber.

7. Coffee machine according to one or more of the preceding claims, **characterised in that** said input line (7) is coaxial with said dispenser (2), while said output line (8) is transverse to said dispenser (2).

8. Coffee machine according to one or more of the preceding claims, **characterised in that** said output line (8) is composed by a plurality of calibrated holes.

9. Coffee machine according to one or more of the preceding claims, **characterised in that** said accessory (3) has a positioning container (15) of a cartridge or filter containing the aromatic essence for the preparation of said drink, and operative connection means between said container (15) and said collecting chamber (5), between an offset position between said output line (8) of said collecting chamber (5) and said container (15) to permit the loading/unloading of said cartridge or filter into/out of said container and a superimposed position between said output line of said collecting chamber and said container to permit the feeding of said container with hot water for the preparation of said drink.

10. Coffee machine according to claim 9
**characterised in that** said operative connection means between said container and said collecting chamber comprise a rotation pin transverse to the axis of said dispenser.

11. Coffee machine according to claims (9-10), **characterised in that** said container (15) has on its bottom at least one dispensing hole (19) of said drink.

12. Coffee machine according to claims 9-11, **characterised in that** said accessory (3) has means of mechanical matching between said collecting chamber and said container (15) at said alignment position.

13. Coffee machine according to claims 11-12, **characterised in that** said accessory (3) has a shutter (21) of said dispensing hole (19) borne by a lever (22) which supports it, in opposition and by the action of elastic means, in a normally closed position.

14. Coffee machine according to claim (13), **characterised in that** said lever (22) is articulated at the bottom of said container (15).

15. Coffee machine according to claim (14), **characterised in that** said lever (22) has a control cam (24) of the opening of said shutter (21), operated by a sloped conveyance ramp (25) of said drink towards said collector (13) which is positioned below said container (15).

16. Coffee machine according to claim 15, **characterised in that** said ramp (25) is made on said cover (14) of said collector (13) and has sides (26) for the lateral containment of the flow of said drink and at the base at least one conveyance hole (27) of said drink to the inside of said collector (13).

17. Coffee machine according to one or more of the preceding claims 9-16, **characterised in that** said container (15) has a handle (20) for facilitating its rotation with respect to said collecting chamber.

18. Coffee machine according to one or more of the preceding claims 2-17, **characterised in that** said collecting chamber (5) is made from said cover (14) of said collector (13).

19. Coffee machine according to one or more of the preceding claims 2-18, in which said accessory (3) is for the production of an aromatic drink beginning with a water-soluble essence, **characterised in that** inside said collecting chamber (5), an impeller (29) is present having a shaft (30) which extends into said collector (13), where it supports a stirrer (31).

20. Coffee machine according to claim 19, **characterised in that** said impeller (29 is aligned with said dispenser (2) so to be directly driven by the flow of water coming from it.

21. Coffee machine according to one or more of the preceding claims 2-20, in which said accessory (3) is for the production of an aromatic drink beginning with a water-soluble essence, **characterised in that** said accessory has a gear transmission (32) adapted to transmit a rotating movement to a shaft (30) which extends into said collector (13), where it supports a stirrer (31).

22. Coffee machine according to claim 21, **characterised in that** said transmission (32) is contained in a housing chamber (33) made in said cover (14) of said collector (13).

23. Coffee machine according to claims 21-22, **characterised in that** said transmission (32) has an attachment (34) adapted for its connection to a power drive (35) present in said coffee machine.

24. Coffee machine according to claim 23, **characterised in that** said accessory (3) comprises a switching element (36) of a microswitch (37) which activates said power drive (35) when said attachment is connected to said power drive.

25. Coffee machine according to claim 2, in which said accessory (3) is for the production of an aromatic drink beginning with a water-soluble essence **characterised in that** inside said collector (13) a stirrer (31) is present, freely rotating on a support and guide pin (38) on which it is fit, said stirrer bearing at its base at least one movement drive element (39) composed by a magnet operated by a magnet motor (40) arranged at a portion of the body of said coffee machine on which said collector lies.

26. Coffee machine according to claim 2, **characterised in that** said collector (13) has at its interior a rotating stirrer (31) which extends outside said cover (14) with a handle (45) for its manual operation, operative connection means (46) being moreover foreseen between said stirrer (31) and a containment drawer (48) of said aromatic essence, between an opening position of said drawer to allow the loading of said aromatic essence and a closed position of said drawer for the execution of the infusion.

27. Coffee machine according to claim 26, **characterised in that** said drawer (48) extends below said stirrer.

28. Coffee machine according to claim 27, **characterised in that** said drawer (48) has tubular conformation with the top open and a plurality of through slits (50) on its lateral wall.

29. Coffee machine according to one or more of the preceding claims 26-28, **characterised in that** said operative connection means between said stirrer (31) and said drawer (48) comprise a rotation pin which extends parallel to the axis of said stirrer and peripherally unites said stirrer and said drawer.

30. Coffee machine according to one or more of the preceding claims 26-29, **characterised in that** centrally said cover (14) has a support and guide through seat (51) for the extraction and introduction of the set composed by said stirrer (31) and said drawer (48) from/into said collector.

31. Coffee machine according to one or more of the preceding claims 26-29, **characterised in that** said accessory has centring and rotation guiding means (52) of said drawer (48), positioned between the bottom of said drawer (48) and the bottom of said vessel.

32. Method of operation of a coffee machine in accordance with one or more preceding claims, **characterised in that** the control unit of said machine executes the adaptation of the operation parameters to the type of drink to be prepared.

33. Method of operation in accordance with the preceding claim, **characterised in that** said adaptation is realised after the acquisition, by said control unit, of the type of drink which the user chooses through the selection of a corresponding button present on the push-button pad of said machine.

34. Method of operation of a coffee machine in accordance with one or more of the preceding claims, **characterised in that** said adaptation is realised after the acquisition, by said control unit, of the accessory type which is connected to the machine, which a suitable sensor system communicates to said control unit with the connection of said accessory.

## Patentansprüche

1. Struktur einer Kaffeemaschine (1) mit einer großen Verwendungsflexibilität, **dadurch gekennzeichnet, dass** sie zahlreiche Zubehörteile (3) für die Erzeugung von verschiedenen Arten von Heißgetränken sowie einen Träger (4) für die besagten Zubehörteile umfasst, wobei jedes der besagten Zubehörteile (3) eine Auffangkammer (5) umfasst, die geeignet ist, beweglich mittels hydraulischer Abdichtungsmittel (6) mit der Düse (2) der äußeren Heißwasser/Dampfausgabe der besagten Kaffeemaschine (1) verbunden zu werden, wobei die besagte Auffangkammer (5) mindestens eine Eingangsleitung (7) für das von der besagten Ausgabe (2) kommende heiße Wasser bzw. Dampf besitzt, sowie eine Ausgangsleitung (8) für das besagte Heißwasser bzw. Dampf.

2. Kaffeemaschine nach Anspruch 1, **dadurch gekennzeichnet, dass** jedes der besagten Zubehörteile (3) eine Auffangvorrichtung (13) für das besagte Getränk umfasst, die mit einem Deckel (14) ausgestattet ist.

3. Kaffeemaschine nach jedem der vorhergehenden Ansprüche, **dadurch gekennzeichnet, dass** das besagte Trägermittel (4) der besagten Zubehörteile ein kastenartiges Gehäuse (9) umfasst, das eine herausnehmbare Schublade (10) in seinem Inneren besitzt.

4. Kaffeemaschine nach jedem der vorhergehenden Ansprüche, **dadurch gekennzeichnet, dass** das besagte Trägermittel (4) der besagten Zubehörteile ein kastenartiges Gehäuse (9) umfasst, an welchem mindestens eine Tür (11) zu seiner Verschließung drehgelagert ist.

5. Kaffeemaschine nach jedem der vorhergehenden Ansprüche, **dadurch gekennzeichnet, dass** das besagte Gehäuse (9) eine Form aufweist, welche mit der Form einer der Seiten oder mit der Rückseite oder mit dem Unterteil oder dem Oberteil der zugeordneten besagten Maschine (1) zusammenpasst.

6. Kaffeemaschine nach einem oder mehreren der vorhergehenden Ansprüche, **dadurch gekennzeichnet, dass** das hydraulische Abdichtungsmittel (6) mindestens eine ringförmige Dichtung zur mechanischen und hydraulischen Abdichtung umfasst, welche zwischen die besagte Ausgabe (2) sowie die besagte Eingangsleitung (7) der besagten Auffangkammer gestellt ist.

7. Kaffeemaschine nach einem oder mehreren der vorhergehenden Ansprüche, **dadurch gekennzeichnet, dass** die besagte Eingangsleitung (7) koaxial zur besagten Ausgabe (2) verläuft, wobei die besagte Ausgangsleitung (8) quer zur besagten Ausgabe (2) verläuft.

8. Kaffeemaschine nach einem oder mehreren der vorhergehenden Ansprüche, **dadurch gekennzeichnet, dass** die besagte Ausgangsleitung (8) aus einer Vielzahl geeichter Öffnungen besteht.

9. Kaffeemaschine nach einem oder mehreren der vorhergehenden Ansprüche, **dadurch gekennzeichnet, dass** das besagte Zubehörteil (3) einen Positionierbehälter (15) für eine Patrone oder einen Filter besitzt, welcher den aromatischen Extrakt für die Zubereitung des besagten Getränkes sowie ein Betriebsverbindungsmittel zwischen dem besagten Behälter (15) und der besagten Auffangkammer (5) enthält, die sich zwischen einer verschobenen Position zwischen der besagten Ausgangsleitung (8) der besagten Auffangkammer (5) und dem besagten Behälter (15) befindet, um das Beladen/Entladen der besagten Patrone bzw. Filters in/aus dem besagten Behälter zu ermöglichen, sowie einer überlagerten Position zwischen der besagten Ausgangsleitung der besagten Auffangkammer und dem besagten Behälter befindet, um das Befüllen des besagten Behälters mit Heißwasser für die Zubereitung des besagten Getränkes zu ermöglichen.

10. Kaffeemaschine nach Anspruch 9, **dadurch gekennzeichnet, dass** das besagte Betriebsverbindungsmittel zwischen dem besagten Behälter und der besagten Auffangkammer einen Drehstift umfasst, der quer zur Achse der besagten Ausgabe verläuft.

11. Kaffeemaschine nach den Ansprüchen 9 - 10, **dadurch gekennzeichnet, dass** der besagte Behälter (15) an seinem Boden mindestens eine Ausgabeöffnung (19) für das besagte Getränk besitzt.

12. Kaffeemaschine nach den Ansprüchen 9 - 11, **dadurch gekennzeichnet, dass** das besagte Zubehörteil (3) ein Mittel zur mechanischen Zusammenfügung zwischen der besagten Auffangkammer und dem besagten Behälter (15) in der besagten Ausrichtungsposition besitzt.

13. Kaffeemaschine nach den Ansprüchen 9 - 12, **dadurch gekennzeichnet, dass** das besagte Zubehörteil (3) einen Verschluss (21) für die besagte Ausgabeöffnung (19) besitzt, der von einem Hebel (22) getragen wird, welcher ihn durch die Wirkung des elastischen Mittels in einer normalerweise verschlossenen Position dagegen abstützt.

14. Kaffeemaschine nach Anspruch 13, **dadurch gekennzeichnet, dass** der besagte Hebel (22) am Boden des besagten Behälters (15) angelenkt ist.

15. Kaffeemaschine nach Anspruch 14, **dadurch gekennzeichnet, dass** der besagte Hebel (22) einen Steuernocken (24) für die Öffnung des besagten Verschlusses (21) besitzt, der durch eine geneigte Förderrampe (25) des besagten Getränkes zur besagten Auffangsvorrichtung (13) betrieben wird, die unter dem besagten Behälter (15) angebracht ist.

16. Kaffeemaschine nach Anspruch 15, **dadurch gekennzeichnet, dass** die besagte Rampe (25) an dem besagten Deckel (14) der besagten Auffangsvorrichtung (13) geformt ist und Seiten (26) für die seitliche Begrenzung des Durchflusses vom besagten Getränk besitzt, sowie am Unterteil mindestens eine Öffnung zur Beförderung (27) des besagten Getränkes zur Innenseite der besagten Auffangsvorrichtung (13).

17. Kaffeemaschine nach einem oder mehreren der vorhergehenden Ansprüche 9 - 16, **dadurch gekennzeichnet, dass** der besagte Behälter (15) einen Handgriff (20) besitzt, um seine Drehung im Verhältnis zur besagten Auffangkammer zu erleichtern.

18. Kaffeemaschine nach einem oder mehreren der vorhergehenden Ansprüche 9 - 17, **dadurch gekennzeichnet, dass** die besagte Auffangkammer (5) aus dem besagten Deckel (14) der besagten Auffangsvorrichtung (13) gefertigt wurde.

19. Kaffeemaschine nach einem oder mehreren der vorhergehenden Ansprüche 9 - 18, bei welcher das besagte Zubehörteil (3) der Herstellung eines aromatischen Getränkes dient, wobei mit einem wasserlöslichen Extrakt begonnen wird, **dadurch gekennzeichnet, dass** sich innerhalb der Auffangkammer (5) ein Flügelrad (29) befindet, das eine Welle (30) besitzt, welche in die besagte Auffangsvorrichtung (13) hineinragt, wobei die Welle einen Rührer (31) trägt.

20. Kaffeemaschine nach Anspruch 19, **dadurch gekennzeichnet, dass** das besagte Flügelrad (29) auf die besagte Ausgabe (2) ausgerichtet ist, so dass es direkt vom Durchfluss des daraus kommenden Wassers angetrieben wird.

21. Kaffeemaschine nach einem oder mehreren der vorhergehenden Ansprüche 2 - 20, bei welcher das besagte Zubehörteil (3) der Herstellung eines aromatischen Getränkes dient, wobei mit einem wasserlöslichen Extrakt begonnen wird, **dadurch gekennzeichnet, dass** das besagte Zubehörteil ein Zahnradgetriebe (32) besitzt, das geeignet ist, eine Drehbewegung zu einer Welle (30) zu übertragen, welche in die besagte Auffangsvorrichtung (13) hereinragt, wobei die Welle einen Rührer (31) trägt.

22. Kaffeemaschine nach Anspruch 21, **dadurch gekennzeichnet, dass** das besagte Getriebe (32) sich in einer Gehäusekammer (33) befindet, die im besagten Deckel (14) der besagten Auffangsvorrichtung (13) geformt ist.

23. Kaffeemaschine nach Anspruch 21 - 22, **dadurch gekennzeichnet, dass** das besagte Getriebe (32) eine Befestigung (34) besitzt, die für seine Verbindung mit einem in der besagten Kaffeemaschine vorhandenen Kraftantrieb (35) geeignet ist.

24. Kaffeemaschine nach Anspruch 23, **dadurch gekennzeichnet, dass** das besagte Zubehörteil (3) ein Schaltelement (36) eines Mikroschalters (37) umfasst, welcher den besagten Kraftantrieb (35) betätigt, wenn die besagte Befestigung mit dem Kraftantrieb verbunden ist.

25. Kaffeemaschine nach Anspruch 24, bei welcher das besagte Zubehörteil (3) der Herstellung eines aromatischen Getränkes dient, wobei mit einem wasserlöslichen Extrakt begonnen wird, **dadurch gekennzeichnet, dass** sich innerhalb der besagten Auffangsvorrichtung (13) ein Rührer (31) befindet, der sich frei auf einem Träger und einem Führungsstift (38) dreht, auf welchem er aufgelagert ist, wobei der besagte Rührer an seinem Unterteil mindestens einen Bewegungsantrieb (39) trägt, der aus einem Magnet besteht, der durch einen Magnetmotor (40) betrieben wird, der an einem Abschnitt des Körpers der besagten Kaffeemaschine angebracht ist, auf welcher die besagte Auffangsvorrichtung aufliegt.

26. Kaffeemaschine nach Anspruch 2, **dadurch gekennzeichnet, dass** die besagte Auffangsvorrichtung (13) in ihrem Inneren einen sich drehenden Rührer (31) besitzt, welcher aus dem besagten Deckel (14) mit einem Handgriff (45) für seine handbetätigte Bedienung herausragt, wobei außerdem ein Betriebsverbindungsmittel (46) zwischen dem besagten Rührer (31) und einer Aufnahmelade (48) für den besagten aromatischen Extrakt zwischen einer Öffnungsposition der besagten Lade vorgesehen ist, um die Zugabe des besagten aromatischen Extraktes zu ermöglichen, sowie einer Verschlussposition der besagten Lade, um den Aufguss auszuführen.

27. Kaffeemaschine nach Anspruch 26, **dadurch gekennzeichnet, dass** die besagte Lade (48) unter dem besagten Rührer herausragt.

28. Kaffeemaschine nach Anspruch 27, **dadurch gekennzeichnet, dass** die besagte Lade (48) eine rohrförmige Ausgestaltung hat, bei der das Oberteil geöffnet ist und sich eine Vielzahl von durchgängigen Schlitzen (50) in ihrer Seitenwand befindet.

29. Kaffeemaschine nach einem oder mehreren der vorhergehenden Ansprüche 26 - 28, **dadurch gekennzeichnet, dass** das Betriebsverbindungsmittel zwischen dem besagten Rührer (31) und der besagten Lade (48) einen Drehstift umfasst, welcher sich parallel zur Achse des besagten Rührers ausdehnt und peripher den besagten Rührer mit der besagten Lade zusammenfügt.

30. Kaffeemaschine nach einem oder mehreren der vorhergehenden Ansprüche 26 - 29, **dadurch gekennzeichnet, dass** der Deckel in der Mitte einen Träger und eine durchlässige Führung (51) für die Entnahme bzw. Einführung der aus dem besagten Rührer (31) und der besagten Lade (48) bestehenden Einheit aus jeweils in die Auffangsvorrichtung besitzt.

31. Kaffeemaschine nach einem oder mehreren der vorhergehenden Ansprüche 26 - 29, **dadurch gekennzeichnet, dass** das besagte Zubehörteil zentrale und sich drehende Führungen (52) für die besagte Lade (48) besitzt, die sich zwischen dem Boden der besagten Lade (48) und dem Boden des besagten Gefäßes befinden.

32. Methode zur Bedienung einer Kaffeemaschine in Übereinstimmung mit einem oder mehreren der vorhergehenden Ansprüche, **dadurch gekennzeichnet, dass** die Steuereinheit der besagten Maschine die Anpassung der Bedienungsparameter an die Art des zuzubereitenden Getränkes ausführt.

33. Methode zur Bedienung in Übereinstimmung mit dem vorherigen Anspruch, **dadurch gekennzeichnet, dass** die besagte Anpassung der Art des Getränkes, das durch die Wahl eines übereinstimmenden Knopfes ausgewählt wurde, der sich auf der Druckknopfleiste der besagten Maschine befindet, nach dem Erwerb mittels der besagten Steuereinheit erzeugt wird.

34. Methode zur Bedienung einer Kaffeemaschine in Übereinstimmung mit einem oder mehreren der vorhergehenden Ansprüche, **dadurch gekennzeichnet, dass** die besagte Anpassung nach dem mittels der besagten Steuereinheit ausgeführten Erwerb der Art des an der Maschine angeschlossenen Zubehörteiles geschehet, wobei solche Nachricht über die Art des Zubehörteiles von einem geeigneten Sensorsystem bei der Verbindung des besagten Zubehörteiles an die besagten Steuereinheit überträgen wird.

## Revendications

1. Structure de machine à café (1) haute flexibilité d'utilisation, **caractérisée en ce qu'**elle comporte des accessoires multiples (3) pour la réalisation de plusieurs types de boissons chaudes et moyens de soutien (4) des accessoires susdits, chacun des accessoires (3) susdits comportant une chambre de collecte (5) apte à être branchée d'une façon mobile, par des moyens d'étanchéité hydraulique (6), à la buse (22) du distributeur d'eau chaude/vapeur extérieure de la machine à café (1) susdite, la chambre de collecte (5) susdite ayant au moins une ligne d'entrée (7) de l'eau chaude ou vapeur susdite provenant du distributeur (2) susdit et une ligne de sortie (8) de l'eau chaude ou vapeur susdite.

2. Machine à café selon la revendication 1, **caractérisée en ce que** chacun des accessoires (3) susdits a un collecteur (13) de la boisson susdite équipé d'un couvercle (14).

3. Machine à café selon n'importe quelle des revendications précédentes, **caractérisée en ce que** le moyen de soutien (4) susdit des accessoires susdits comporte une gaine (9) ayant un tiroir extractible (10) à son intérieur.

4. Machine à café selon n'importe quelle des revendications précédentes, **caractérisée en ce que** le moyen de soutien (4) des accessoires susdits comporte une gaine (9) par-dessus laquelle au moins une porte (11) est rabattue sur une charnière pour sa fermeture.

5. Machine à café selon n'importe quelle des revendications précédentes, **caractérisée en ce que** la gaine (9) susdite a une forme s'assortissant à celle d'un des côtés ou au dos ou à la base ou au sommet de la machine (1) susdite à laquelle elle est associée.

6. Machine à café selon l'une ou plusieurs des revendications précédentes, **caractérisée en ce que** les moyens d'étanchéité hydraulique (6) comportent au moins un joint toroïdal du dispositif d'étanchéité mécanique et hydraulique interposé entre le distributeur (2) susdit et la ligne d'entrée (7) susdite de la chambre de collecte susdite.

7. Machine à café selon l'une ou plusieurs des revendications précédentes, **caractérisée en ce que** la ligne d'entrée (7) susdite est coaxiale avec le distributeur (2) susdit, tandis que la ligne de sortie (8) susdite est transversale par rapport au distributeur (2) susdit.

8. Machine à café selon l'une ou plusieurs des revendications précédentes, **caractérisée en ce que** la ligne de sortie (9) susdite est constituée d'une pluralité de trous calibrés.

9. Machine à café selon l'une ou plusieurs des revendications précédentes, **caractérisée en ce que** l'accessoire (3) susdit a un récipient (15) de positionnement d'une cartouche ou filtre contenant l'essence aromatique pour la préparation de la boisson susdite, et les moyens de branchement opérationnel entre le récipient (15) susdit et la chambre de collecte (5) susdite, entre une position de décalage entre la ligne de sortie (8) susdite de la chambre de collecte (5) susdite et le récipient (15) susdit pour permettre le chargement/déchargement de la cartouche ou du filtre susdit à l'intérieur/à l'extérieur du récipient susdit et une position superposée entre la ligne de sortie susdite de la chambre de collecte susdite et le récipient susdit pour permettre l'alimentation du récipient susdit en eau chaude pour la préparation de la boisson susdite.

10. Machine à café selon la revendication 9, **caractérisée en ce que** les moyens de branchement opérationnels susdits entre le récipient susdit et la chambre de collecte susdite comportent un tourillon de rotation transversal par rapport à l'axe du distributeur susdit.

11. Machine à café selon les revendications 9 à 10, **caractérisée en ce que** le récipient (15) susdit a sur son fond au moins un trou de distribution (19) de la boisson susdite.

12. Machine à café selon les revendications 9 à 11, **caractérisée en ce que** l'accessoire (3) susdit a des moyens d'appariement mécanique entre la chambre de collecte susdite et le récipient (15) susdit dans la position d'alignement susdite.

13. Machine à café selon les revendications 11 à 12, **caractérisée en ce que** l'accessoire (3) susdit a un volet (21) du trou de distribution (19) susdit soutenu par un levier (22) qui le soutient, en opposition et par l'action de moyens élastiques, dans une position normalement fermée.

14. Machine à café selon la revendication 13, **caractérisée en ce que** le levier (22) susdit est articulé sur le fond du récipient (15) susdit.

15. Machine à café selon la revendication 14, **caractérisée en ce que** le levier (22) susdit a une came de commande (24) de l'ouverture du volet (21) susdit, entraînée par une rampe de transport inclinée (25) de la boisson susdite vers le collecteur (13) susdit qui est positionné par-dessous le récipient (15) susdit.

16. Machine à café selon la revendication 15, **caractérisée en ce que** la rampe (25) susdite est réalisée sur le couvercle (14) susdit du collecteur (17) susdit et qu'elle a des côtés (26) pour la contenance latérale du débit de la boisson susdite et à la base au moins un trou de transport (27) de la boisson susdite vers l'intérieur du collecteur (13) susdit.

17. Machine à café selon l'une ou plusieurs des revendications 9 à 16 précédentes, **caractérisée en ce que** le récipient (15) susdit a une poignée (20) pour faciliter sa rotation par rapport à la chambre de collecte susdite.

18. Machine à café selon l'une ou plusieurs des revendications 2 à 17 précédentes, **caractérisée en ce que** la chambre de collecte (15) susdite est obtenue du couvercle (14) susdit du collecteur (13) susdit.

19. Machine à café selon l'une ou plusieurs des revendications 2 à 18 précédentes, où l'accessoire (3) susdit est affecté à la production d'une boisson aromatique à partir d'une essence hydrosoluble, **caractérisée en ce qu'**à l'intérieur de la chambre de collecte (5) susdite, une roue à palettes (29) est présente ayant un arbre (34) qui s'étend dans le collecteur (17) susdit, où il soutient un agitateur (31).

20. Machine à café selon la revendication 19, **caractérisée en ce que** la roue à palettes (29) susdite est alignée avec le distributeur (2) susdit de façon à être entraînée directement par le débit d'eau provenant de celui-ci.

21. Machine à café selon l'une ou plusieurs des revendications 2 à 20 précédentes, où l'accessoire (3) susdit est affecté à la production d'une boisson aromatique à partir d'une essence hydrosoluble, **caractérisée en ce que** l'accessoire susdit a une transmission par engrenages (32) apte à transmettre un mouvement rotatif à un arbre (30) qui s'étend dans le collecteur (13) susdit, où il soutient un agitateur (31).

22. Machine à café selon la revendication 21, **caractérisée en ce que** la transmission (32) susdite est contenue dans une chambre (33) réalisée dans le couvercle (14) du collecteur (13) susdit.

23. Machine à café selon les revendications 21 à 22, **caractérisée en ce que** la transmission (32) susdite a un attelage (34) apte à la raccorder à un transmetteur (35) présent dans la machine à café susdite.

24. Machine à café selon la revendication 23, **caractérisée en ce que** l'accessoire (3) susdit comporte un élément de commutation (36) d'un micro-rupteur (37) qui active le transmetteur (35) susdit, lorsque l'attelage susdit est raccordé au transmetteur susdit.

25. Machine à café selon la revendication 24, où l'accessoire (3) susdit est affecté à la production d'une boisson aromatique à partir d'une essence hydrosoluble, **caractérisée en ce qu'**à l'intérieur du collecteur (13) susdit un agitateur (31) est présent en tournant librement sur un goujon de soutien et guidage (38) par-dessus lequel il est aménagé, l'agitateur susdit portant sur sa base au moins un élément d'entraînement (39) constitué d'un aimant entraîné par un moteur à aimant (40) agencé dans une portion du corps de la machine à café susdite par-dessus laquelle le collecteur susdit repose.

26. Machine à café selon la revendication 1, **caractérisée en ce que** le collecteur (13) susdit a à son intérieur un agitateur rotatif (31) qui s'étend à l'extérieur du couvercle (14) susdit avec une poignée (45) pour son fonctionnement manuel, des moyens de raccordement de service (46) étant aussi prévus entre l'agitateur (31) susdit et un tiroir de contenance (48) de l'essence aromatique susdite, entre une position d'ouverture du tiroir susdit pour permettre le chargement de l'essence aromatique susdite et une position fermée du tiroir susdit pour l'exécution de l'infusion.

27. Machine à café selon la revendication 26, **caractérisée en ce que** le tiroir (48) susdit s'étend par-dessous l'agitateur susdit.

28. Machine à café selon la revendication 27, **caractérisée en ce que** le tiroir (48) susdit a une conformation tubulaire avec son sommet ouvert et une pluralité de fentes (50) sur sa paroi latérale.

29. Machine à café selon l'une ou plusieurs des revendications 26 à 28 précédentes, **caractérisée en ce que** le moyen de raccordement de service susdit entre l'agitateur (31) susdit et le tiroir (48) susdit comporte un tourillon de rotation qui s'étend parallèlement à l'axe de l'agitateur susdit et qui relie périphériquement l'agitateur susdit et le tiroir susdit.

30. Machine à café selon l'une ou plusieurs des revendications 26 à 29 précédentes, **caractérisée en ce que**, centralement, le couvercle (14) susdit a un soutien et un guide à travers son siège (51) pour l'extraction et l'introduction de l'ensemble constitué par l'agitateur (31) susdit et le tiroir (48) susdit depuis/dans le collecteur susdit.

31. Machine à café selon l'une ou plusieurs des revendications 26 à 29 précédentes, **caractérisée en ce que** l'accessoire susdit a des moyens de centrage, rotation et guidage (52) du tiroir (48) susdit, positionnés entre le fond du tiroir (48) susdit et le fond du récipient susdit.

32. Procédé de fonctionnement d'une machine à café selon l'une ou plusieurs des revendications précédentes, **caractérisé en ce que** l'unité de commande de la machine susdite exécute l'ajustage des paramètres de fonctionnement d'après le type de boisson à préparer.

33. Procédé de fonctionnement selon la revendication précédente, **caractérisé en ce que** l'ajustage susdit est réalisé après la saisie, par l'unité de commande susdite, du type de boisson que l'utilisateur choisit par la sélection d'un bouton y afférent présent sur le boîtier de commande de la machine susdite.

34. Procédé de fonctionnement d'une machine à café selon l'une ou plusieurs des revendications précédentes, **caractérisé en ce que** l'ajustage susdit est réalisé après la saisie, par l'unité de commande susdite, du type d'accessoire qui est branché à la machine, ce-dernier étant communiqué par un système de capteurs approprié à l'unité de commande susdite avec le branchement de l'accessoire susdit.
